# EUROPEAN PATENT SPECIFICATION

(11) **EP 3 468 333 B1**
(45) Date of publication and mention of the grant of the patent: **15.04.2020**
(21) Application number: 17739717.1
(22) Date of filing: 02.06.2017
(51) Int. Cl.: A01B 15/16

(54) **DISC TOOL, AGRICULTURAL IMPLEMENT COMPRISING SUCH A DISC TOOL AND METHOD FOR MANUFACTURING A DISC TOOL**
SCHEIBENWERKZEUG, LANDWIRTSCHAFTLICHES ARBEITSGERÄT MIT SOLCH EINEM SCHEIBENWERKZEUG UND VERFAHREN ZUR HERSTELLUNG EINES SCHEIBENWERKZEUGS
OUTIL À DISQUE, OUTIL AGRICOLE COMPRENANT UN TEL OUTIL À DISQUE ET PROCÉDÉ DE FABRICATION D'UN OUTIL À DISQUE

(30) Priority: 10.06.2016 SE 1650815
(43) Date of publication of application: 17.04.2019
(73) Proprietor: Väderstad Holding AB, 590 21 Väderstad (SE)
(72) Inventor: STARK, Crister, 590 21 VÄDERSTAD (SE); HAMMARSTRÖM, Urban, 596 33 SKÄNNINGE (SE); ESKO, Heino, 590 96 ÖVERUM (SE); SOMLIN, Dan, 593 93 VÄSTERVIK (SE)
(74) Representative: AWA Sweden AB
(86) International application number: PCT/SE2017/050591
(87) International publication number: WO 2017/213575

(56) References cited:
- WO-A1-2014/137281
- FR-A1- 2 646 585
- FR-A1- 2 945 179
- GB-A- 2 437 481
- US-B2- 7 143 838

## Description

### Technical field

This document relates to a disc tool for an agricultural implement, to an agricultural implement comprising such a disc tool, and to a method for manufacturing such a disc tool.

The disc tool is of the type that is specially suited to breaking up field residues, for example from oil-yielding plants, but also from maize or other crops, and that provides working depths of down to ca. 10 cm.

### Background

It is known to cultivate soil with the aid of disc tools in order to achieve different types of soil improvement. For some types of crops, it is desirable to carry out relatively shallow soil cultivation, about 1-3 cm, while plant residues situated on the soil surface are chopped up, ground or mechanically crushed in some other way.

Such soil cultivation is normally sought across the full width of the agricultural implement, i.e. not only sideways from mutually separate tracks.

Particularly in the cultivation of rape, it is desirable to crush rape plant residues, including stalks and seed capsules, in order to reduce the risk of diseases.

A known disc tool of this kind is disclosed in SE537123 C2. This tool has protruding parts which extend radially out toward the periphery and which have cutting edges extending 15-75 degrees relative to the plane of the disc tool.

In some circumstances, the disc tool disclosed in SE537123 C2 can accumulate plant residues, such as straw and weeds, which means that the cultivation has to be interrupted in order for the tools to be cleaned.

There is a need for tools that can satisfy the same function but have less need of cleaning and can at the same time be manufactured at low cost.

### Summary

It is therefore an object to make available an improved disc tool for breaking up field residues.

The invention is defined by the accompanying independent claims. Embodiments are set out in the dependent claims, in the following description and in the accompanying drawings.

According to a first aspect, a disc tool is made available for breaking up field residues, comprising a central hub portion, which is designed for mounting the disc in a tool holder in order to make the disc rotatable about a rotation axis, and a cultivating portion, which is located radially outside of and adjoins the hub portion. The cultivating portion moreover comprises a plurality of substantially straight cutting edges which are located at the periphery of the disc tool. The cultivating portion has a plurality of undulations which, with an axial extent decreasing toward the inside, run from the cutting edges to the hub portion. The cutting edge is designed such that 90-98% of a track formed by the cutting edge consists of straight track portions.

Here, "track" signifies the track that is formed by the actual disc tool when it rolls with its rotation axis substantially at right angles to the ground. It will be appreciated that, depending on the design involved, such a track can consist either of straight portions interrupted by curved portions or of straight portions interrupted by an absence of tracks.

The expression "substantially straight" means that the cutting edges are straight when viewed in at least one plane.

When dimensions are given as angles in relation to a central angle, this signifies an angle taken at the center of the disc tool.

The radial direction is a direction from the center of the disc tool and at right angles to the rotation axis of the disc tool.

The axial direction is parallel to the rotation axis of the disc tool.

The circumferential direction is a direction that follows the periphery of the disc tool.

A direction of travel is the direction that the agricultural implement normally follows when in use.

A disc tool according to what has been described above has been found to be very good at breaking up field residues, while at the same time being able to be manufactured at low cost and having a reduced tendency to accumulate field residues.

The disc tool, viewed in a circumferential direction at the periphery of the disc tool, can have adjacent cutting edges at an angle to each other of 75°-115°, preferably 85°-115°, 95°-105° or 100°-105°.

The disc tool can further comprise a recess which extends radially inward from the periphery and which is located at an imaginary intersection between two cutting edges.

The recess can extend radially inward by a distance corresponding to 10-60% of a radius of the disc.

The recess can extend corresponding to a central angle of 1°-25°, preferably 2°-15° or 2°-10°.

The cutting edges, viewed along the periphery, can have angles alternating, by the same amount +/- 5°, with respect to the hub portion.

The cutting edges can have an angle of 30°-55° relative to a plane which is at right angles to the rotation axis of the disc tool, preferably 30°-50° or 35°-45°.

The cutting edges can be beveled, such that each cutting edge has a material thickness that decreases outward to the edge.

A plane which is at right angles to the rotation axis can be defined by a transition portion where the radially outer portion of the hub portion meets the radially inner portion of the cultivating portion, and the cultivating portion can be located 30-70% on one axial side of said plane and 70-30% on the other axial side of said plane.

The undulations can, at the periphery of the disc tool, have an axial extent of 8-18 cm, preferably 8-15 cm or 9-12 cm.

According to a second aspect, an agricultural implement for soil cultivation is made available, comprising a plurality of disc tools according to what has been described above.

The disc tools can be arranged such that the rotation axis, i.e. the rotation axis of the respective disc tool, has an angle of 70°-80° relative to a direction of travel.

The rotation axes of the disc tools can be mutually parallel but not coincident.

The disc tools can be arranged along first and second transverse rows, wherein the disc tools on a respective row are arranged at substantially the same distance from each other and with parallel rotation axes, and wherein the disc tools on one of the rows are offset sideways by a distance of 80-120% of said mutual distance relative to the disc tools on a second of the rows.

Said mutual distance can be 80-120% of the axial extent of one of the disc tools, preferably 90-110% or 95-105%.

The rotation axes of the disc tools of the first row can be non-parallel to the rotation axes of the disc tools of the second row.

The rotation axes of the two rows preferably have angles of the same amount with respect to the direction of travel.

A third aspect concerns a use of the agricultural implement according to what has been described above for breaking up field residues, the disc tools providing an average working depth of less than 10 cm, preferably less than 5 cm.

A fourth aspect concerns a method for manufacturing a disc tool for soil cultivation, which method comprises cutting a plane disc blank of metal to a substantially circular or polygonal shape, formation of a plurality of cutting edges along a periphery of the cut disc blank, and compression-molding of the cut disc blank such that a plurality of undulations are obtained which, with an axial extent decreasing toward the inside, run from the cutting edges to a central portion of the disc tool, and such that 90-98% of a track formed by the cutting edge consists of straight track portions.

The method can be carried out such that the resulting disc tool, viewed in a circumferential direction at the periphery of the disc tool, has adjacent cutting edges at an angle to each other of °-105°, preferably 80°-100° or 85°-95°.

The method can further comprise forming radial recesses which extend inward from the periphery and where adjacent cutting edges are to meet.

The method can further comprise heating the disc blank in conjunction with said compression molding.

The disc blank can be cut so as to form a circular disc blank.

Alternatively, the disc blank can be cut so as to form an equilateral polygon with 5-12 sides.

In such a polygon, two cutting edges can be formed for each side of the polygon.

Alternatively, one cutting edge can be formed for each side of the polygon.

### Brief description of the drawings

Figs 1a-1c show schematic views of a first variant of a disc tool.
Figs 2a-2c show schematic views of a second variant of a disc tool.
Figs 3a-3c show schematic views of a third variant of a disc tool.
Figs 4a-4f show schematic views of an agricultural implement comprising a plurality of disc tools according to any one of Figs 1a-1c, Figs 2a-2c or Figs 3a-3c.

### Detailed description

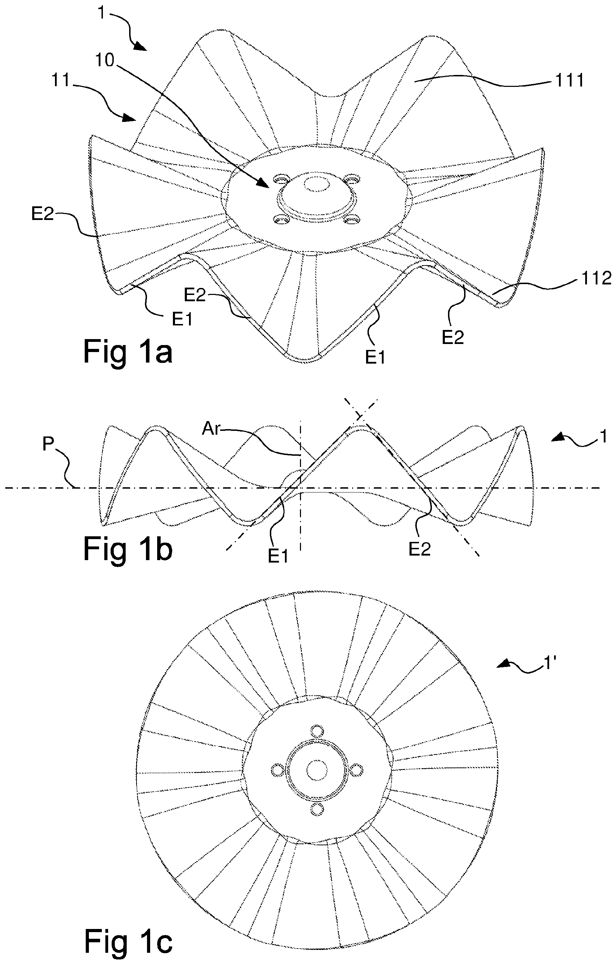

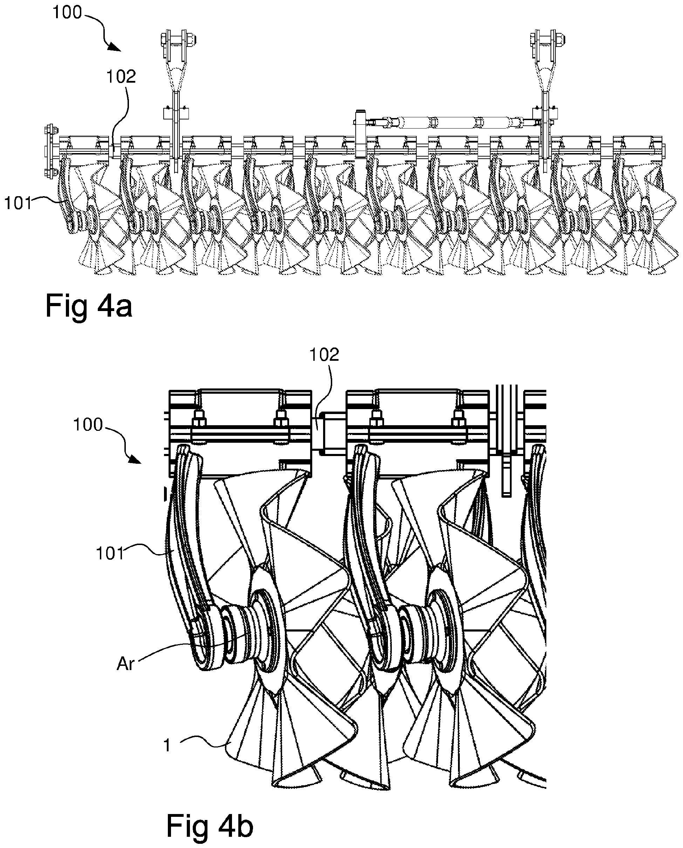

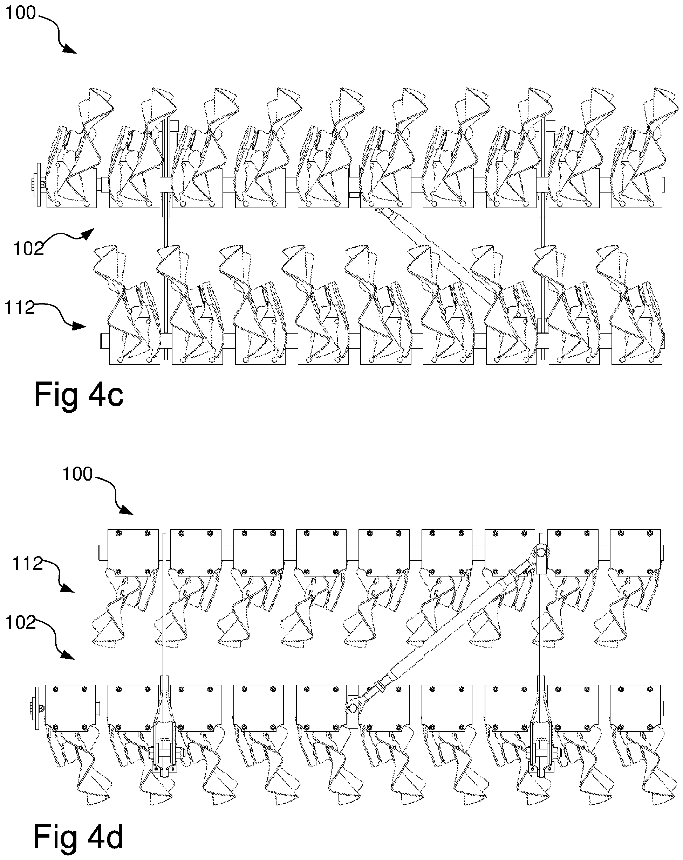

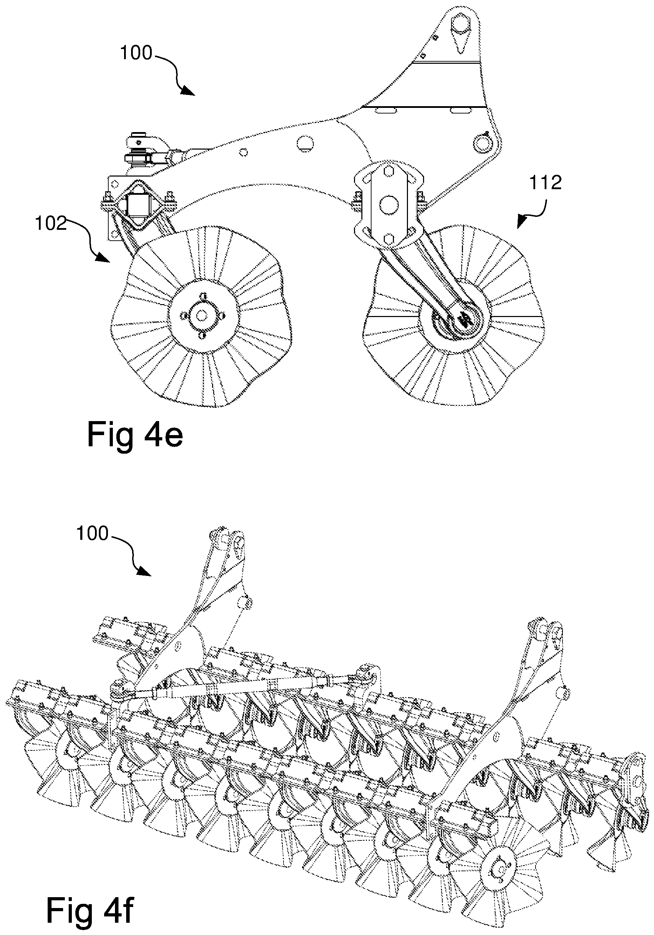

Figs 1a-1c show a disc tool 1 according to a first embodiment. The disc tool comprises a hub portion 10 and a cultivating portion 11. The hub portion is located in the central portion of the disc tool and is thus surrounded by the cultivating portion 11. The hub portion 10 is designed for attachment to a bearing, such that the disc tool 1 can be fastened rotatably relative to an agricultural implement 100, for example as shown in Figs 4a-4f.

The hub portion 10 can comprise a plane portion, which surrounds a fastening arrangement and of which the radially outermost portion adjoins the cultivating portion 11.

The cultivating portion 11 comprises a plurality of undulations 111, 112, which have an amplitude decreasing toward the hub portion 10. Specifically, the amplitude can decrease linearly in the direction toward the hub portion 10.

At the radially outermost portion of the cultivating portion 11 there is a cutting edge E1, E2, which can be formed by chamfering or grinding the piece of material from which the disc tool 1 is formed.

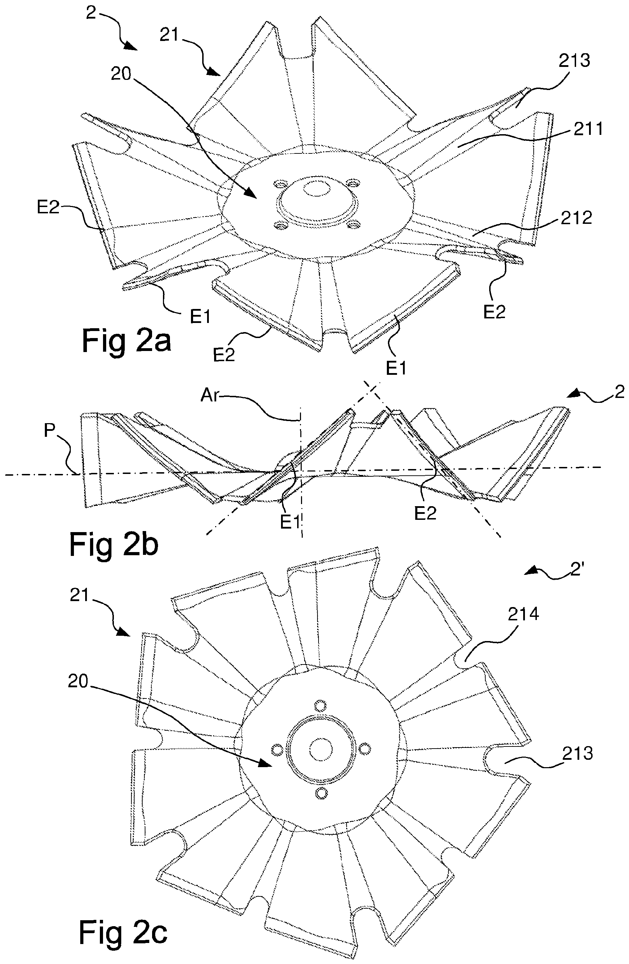

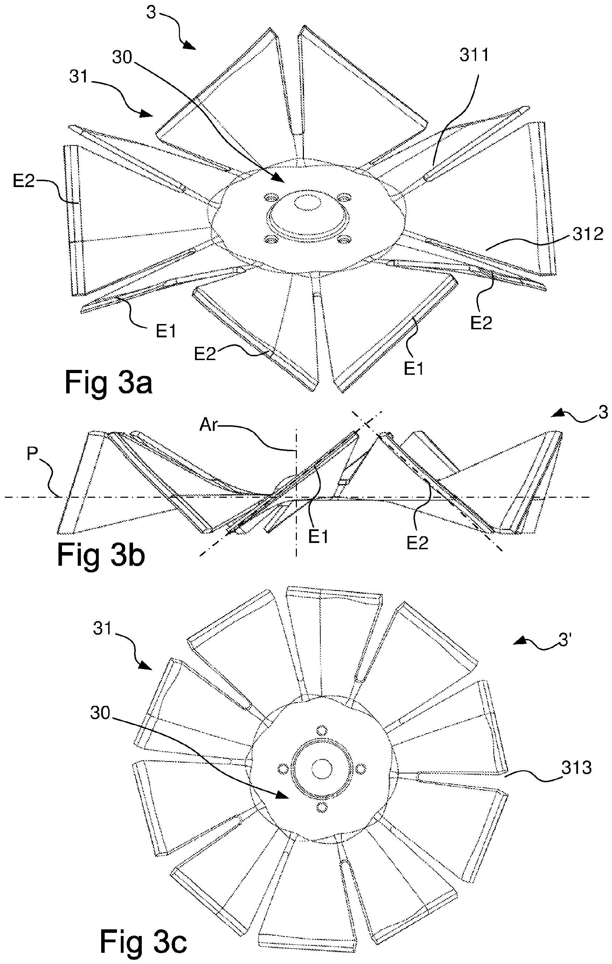

The cutting edge E1, E2 is configured such that most of its length, preferably at least 90% of its length, consists of straight portions E1, E2. These straight portions E1, E2 can be separated by curved portions, as is shown in Figs 1a-1c, or by recesses 213, 21, 313, as shown in Figs 2a-2c and in Figs 3a-3c.

Here, "straight portions" means portions which are straight when viewed in at least one plane. Specifically, the straight portions shown in Figs 1a-1c are straight when viewed in a plane that contains the cutting edge, as is indicated by the lines at E1 and E2 in Fig. 1b.

The straight portions have an angle of 30°-55° relative to a plane P which is at right angles to the rotation axis of the disc tool, preferably 30°-50°. The angle can most preferably be 35°-45°.

In the examples shown, the cutting edges of the disc tool, viewed along the periphery, can have angles alternating, by the same amount +/- 5°, with respect to the plane P.

Each pair of adjacent straight portions E1, E2 has a mutual angle of 75°-115°, preferably 85°-115°, 95°-105° or 100°-105°. As will be seen, the angle between each pair of adjacent straight portions E1, E2 is about 90°.

The cutting edges E1, E2 can have a maximum axial amplitude of about 8-18 cm, preferably 8-15 cm. Specifically, the amplitude can be 9-12 cm.

Moreover, the cultivating portion 11 can be located 40-60% on one axial side of said plane P and 60-40% on the other axial side of the plane P.

The disc tool 1 in Figs 1a-1c can be formed by compression-molding of a plane, disc-shaped blank 1' of metal. The thickness of such a disc blank can be of the order to 3-15 mm, preferably 5-10 mm.

The disc blank 1', and the resulting disc tool 1, can have a diameter of about 400-700 mm.

Specifically, the tool shown in Figs 1a-1c is formed from a circular disc-shaped blank.

The compression molding can proceed such that the disc blank 1' is heated and is then pressed by a pair of tools comprising an upper part and a lower part, where undulations oriented in one axial direction are formed along a respective edge of one tool part and undulations oriented in another direction are formed along a respective edge of the other tool part.

Figs 2a-2c show a second embodiment of a disc tool 2. This disc tool 2 has a recess 213, 214 which extends radially inward from the periphery and which is located at an imaginary intersection between two cutting edges E1, E2.

The hub portion 20 may be identical to the hub portion 10 shown in Figs 1a-1c. By contrast, the cultivating portion 21 differs from the one shown in Figs 1a-1c.

In the tool in Figs 2a-2c, the configuration and extent of the undulations 211, 212 can be the same as in the tool in Figs 1a-1c.

However, the cutting edges E1, E2 of the tool in Figs 2a-2c can be straight not just in one dimension but instead in two mutually orthogonal dimensions.

The recess 213, 214 can extend radially inward by a distance corresponding to 10-30% of a radius of the disc tool 2, preferably of a maximum radius of the disc tool 2.

The recess 213, 214 means that the stretching of the material that takes place at its outermost portion during the shaping of the disc tool 2 from the plane disc blank 2' can be reduced, which means that it is possible to reduce the risk of cracks forming and of the finished disc tool 2 breaking.

The recess 213, 214 can extend corresponding to a central angle of 1°-25°, preferably 2°-15° or 2°-10°.

The disc tool 2 shown in Figs 2a-2c can be formed starting from an equilateral polygonal disc blank 2' made of metal. In the example shown, the disc blank is substantially pentagonal, with two cutting edges having been formed along each side of a pentagon. The disc blank 2', and the resulting disc tool 2, can have a maximum crosswise dimension (corresponding to a diameter) of about 400-700 mm.

Recesses 213 between cutting edges E1, E2 that are formed from different sides of the pentagon can be larger than recesses 214 between cutting edges that are formed from one and the same side of the pentagon.

Figs 3a-3c show a third embodiment of a disc tool 3. This disc tool 3 also has a recess 313 which extends radially inward from the periphery and which is located at an imaginary intersection between two cutting edges E1, E2.

The hub portion 30 may be identical to the hub portions 10, 20 shown in Figs 1a-1c and Figs 2a-2c. By contrast, the cultivating portion 31 differs from what is shown in Figs 1a-1c and Figs 2a-2c.

In the tool 3 in Figs 3a-3c, the configuration and extent of the undulations 311, 312 can be the same as in the tools 1, 2 in Figs 1a-1c and in Figs 2a-2c.

In the tool 3 shown in Figures 3a-3c, the recesses 313 can have a substantially greater radial extent, preferably about 40-60% of a maximum radius of the disc tool 3.

Moreover, the recesses 313 can extend over a central angle which is less than in the disc tool 2 in Figs 2a-2c, preferably about 5°-10°.

The disc tool shown in Figs 3a-3c can be formed starting from an equilateral polygonal disc blank 3' made of metal. In the example shown in Figs 3a-3c, the disc blank 3' is a ten-edged polygon, with each cutting lip being formed from one of the edges of the polygon.

The disc blank 3', and the resulting disc tool 3, can have a maximum crosswise dimension (corresponding to a diameter) of about 400-700 mm.

The cutting edges E1, E2 of the tool 3 in Figs 3a-3c can be straight not just in one dimension but instead in two mutually orthogonal dimensions.

Figs 4a-4f show an agricultural implement 100 comprising a plurality of disc tools 1 according to Figs 1a-1c. It will be appreciated that the disc tools 1 can instead be in the form of the disc tools 2, 3 according to Figs 2a-2c or 3a-3c, or a combination thereof.

As will be seen from Figs 4a-4f, each disc tool 1 is arranged on its own arm 101, similarly to what is described in the introductory part of SE537123 C2.

A plurality of such arms 101 can be arranged along a transverse beam 102 of the agricultural implement 100. The arms 101 are preferably arranged at substantially the same distance from one another and are distributed uniformly along at least 90% of the length of the beam 102.

Each disc tool 1 can be rotatable about an axis Ar, which can have an angle of 15°-20°, typically 17°, relative to the longitudinal direction of the beam 102. In the example shown, all of the disc tools 1 on one beam are arranged in the same direction and with parallel rotation axes Ar.

As will be seen from Figs 4c-4f, the agricultural implement 100 can comprise at least two rows 110, 111 of tools, where each row 110, 111 comprises a plurality of tools arranged on respective arms and distributed along a respective beam 102, 112.

Two such beams 102, 112 with disc tools 1 can be arranged such that the disc tools 1 on one beam 102 are offset in the transverse direction of the agricultural implement 100 relative to the disc tools 1 on the other beam 112. For example, the offset can be about 80-120% of the axial extent of the disc tools, preferably 100% +/-5%.

Moreover, the disc tools 1 on one beam 102 can have their rotation axes non-parallel to the disc tools 1 on the other beam 112.

For example, the disc tools 1 on one beam 102 can have their rotation axes Ar inclined relative to the longitudinal direction of the beam by about 15°-20° in one direction, and the disc tools on the other beam can have their rotation axes inclined relative to the longitudinal direction of the beam by about 15°-20° in the other direction.

## Claims

1. A disc tool (1, 2, 3) for breaking up field residues, comprising:
a central hub portion (10, 20, 30), which is designed for mounting the disc in a tool holder in order to make the disc rotatable about a rotation axis (Ar),
a cultivating portion (11, 21, 31), which is located radially outside of and adjoins the hub portion (10, 20, 30), and
a plurality of substantially straight cutting edges (E1, E2) which are located at the periphery of the disc tool,
the cultivating portion (11) having a plurality of undulations (111, 112; 211, 212; 311, 312) which, with an axial extent decreasing toward the inside, run from the cutting edges (E1, E2) to the hub portion (10, 20, 30),
the cutting edge (E1, E2) being designed such that 90-98% of a track formed by the cutting edge consists of straight track portions,
wherein the cutting edges (E1, E2), viewed along the periphery, have angles alternating, by the same amount +/- 5°, with respect to the hub portion,
wherein the cutting edges (E1, E2) have an angle of 35°-55° relative to a plane which is at right angles to the rotation axis of the disc tool,
wherein the cutting edges (E1, E2) are beveled, such that each cutting edge has a material thickness that decreases outward to the edge, and
wherein the undulations (111, 112; 211, 212; 311, 312) have, at the periphery of the disc tool, an axial extent of 8-18 cm, preferably 8-15 cm or 9-12 cm.

2. The disc tool (1, 2, 3) according to claim 1, wherein, viewed in a circumferential direction at the periphery of the disc tool, adjacent cutting edges (E1, E2) are at an angle to each other of 75°-115°, preferably 85°-115°, 95°-105° or 100°-105°.

3. The disc tool (2, 3) according to claim 1 or 2, further comprising a recess (213, 214, 313) which extends radially inward from the periphery and which is located at an imaginary intersection between two cutting edges (E1, E2).

4. The disc tool (2, 3) according to claim 3, wherein the recess (213, 214, 313) extends radially inward by a distance corresponding to 10-60% of a radius of the disc.

5. The disc tool (2, 3) according to claim 3 or 4, wherein the recess (213, 214, 313) extends corresponding to a central angle of 1°-25°, preferably 2°-15° or 2°-10°.

6. The disc tool (1, 2, 3) according to any one of the preceding claims, wherein the cutting edges (E1, E2) have an angle of up to 35°-50° relative to a plane which is at right angles to the rotation axis of the disc tool, preferably 35°-45°.

7. The disc tool (1, 2, 3) according to any one of the preceding claims, wherein a plane (P) which is at right angles to the rotation axis (Ar) is defined by a transition portion where the radially outer portion of the hub portion (10, 20, 30) meets the radially inner portion of the cultivating portion (11, 21, 31), and wherein the cultivating portion (10, 20, 30) is located 30-70% on one axial side of said plane (P) and 70-30% on the other axial side of said plane (P).

8. An agricultural implement for soil cultivation, comprising a plurality of disc tools (1, 2, 3) according to any one of the preceding claims.

9. The agricultural implement according to claim 8, wherein the disc tools (1, 2, 3) are arranged such that the rotation axis (Ar) has an angle of 70°-80° relative to a direction of travel.

10. The agricultural implement according to claim 9, wherein the rotation axes of the disc tools (1, 2, 3) are mutually parallel but not coincident.

11. The agricultural implement according to any one of claims 8-10, wherein the disc tools (1, 2, 3) are arranged along first and second transverse rows, wherein the disc tools (1, 2, 3) on each row are arranged at substantially the same distance from each other and with parallel rotation axes, and wherein the disc tools (1, 2, 3) on one of the rows are offset sideways by a distance of 80-120% of said mutual distance relative to the disc tools (1, 2, 3) on a second of the rows.

12. The agricultural implement according to claim 11, wherein said mutual distance is 80-120% of the axial extent of one of the disc tools (1, 2, 3), preferably 90-110% or 95-105%.

13. The agricultural implement according to claim 11 or 12, wherein the rotation axes of the disc tools (1, 2, 3) of the first row are non-parallel to the rotation axes of the disc tools (1, 2, 3) of the second row.

14. The use of the agricultural implement according to any one of claims 8-13 for breaking up field residues, the disc tools (1, 2, 3) providing an average working depth of less than 10 cm, preferably less than 5 cm.

## Patentansprüche

1. Scheibenwerkzeug (1, 2, 3) zum Aufbrechen von Feldresten, umfassend:
einen mittigen Nabenabschnitt (10, 20, 30), der zum Montieren der Scheibe in einem Werkzeughalter ausgelegt ist, um die Scheibe um eine Drehachse (Ar) drehbar herzustellen,
einen Bearbeitungsabschnitt (11, 21, 31), der sich radial außerhalb von dem Nabenabschnitt (10, 20, 30) befindet und ihn verbindet, und
mehrere im Wesentlichen gerade Schneidkanten (E1, E2), die sich an dem Umfang des Scheibenwerkzeugs befinden,
wobei der Bearbeitungsabschnitt (11) mehrere Wellungen (111, 112; 211, 212; 311, 312) aufweist, welche mit einer axialen Erstreckung nach innen hin abnehmend von den Schneidkante (E1, E2) zu dem Nabenabschnitt (10, 20, 30) verlaufen,
wobei die Schneidkante (E1, E2) derart ausgelegt ist, dass 90-98% einer durch die Schneidkante gebildeten Bahn aus geraden Bahnabschnitten besteht,
wobei die Schneidkanten (E1, E2), entlang des Umfangs betrachtet, Winkel aufweisen, die um den gleichen Betrag +/- 5° in Bezug auf den Nabenabschnitt alternieren,
wobei die Schneidkanten (E1, E2) einen Winkel von 35°-55° relativ zu einer Ebene aufweisen, die in rechten Winkeln zu der Drehachse des Scheibenwerkzeugs ist,
wobei die Schneidkanten (E1, E2) derart abgeschrägt sind, dass jede Schneidkante eine Materialdicke aufweist, die nach außen zu der Kante abnimmt, und
wobei die Wellungen (111, 112; 211, 212; 311, 312) an dem Umfang des Scheibenwerkzeugs eine axiale Erstreckung von 8-18 cm, vorzugsweise 8-15 cm oder 9-12 cm aufweisen.

2. Scheibenwerkzeug (1, 2, 3) nach Anspruch 1, wobei, in einer Umfangsrichtung an dem Umfang des Scheibenwerkzeugs betrachtet, benachbarte Schneidkanten (E1, E2) in einem Winkel von 75°-115°, vorzugsweise 85°-115°, 95°-105° oder 100°-105° zueinander stehen.

3. Scheibenwerkzeug (2, 3) nach Anspruch 1 oder 2, ferner umfassend eine Vertiefung (213, 214, 313), die sich von dem Umfang radial nach innen erstreckt und die sich an einer imaginären Überschneidung zwischen zwei Schneidkanten (E1, E2) befindet.

4. Scheibenwerkzeug (2, 3) nach Anspruch 3, wobei sich die Vertiefung (213, 214, 313) um einen Abstand, der 10-60% eines Radius der Scheibe entspricht, radial nach innen erstreckt.

5. Scheibenwerkzeug (2, 3) nach Anspruch 3 oder 4, wobei sich die Vertiefung (213, 214, 313) entsprechend einem Zentriwinkel von 1°-25°, vorzugsweise 2°-15° oder 2°-10° erstreckt.

6. Scheibenwerkzeug (1, 2, 3) nach einem der vorhergehenden Ansprüche, wobei die Schneidkanten (E1, E2) einen Winkel von bis zu 35°-50°, vorzugsweise 35°-45°, relativ zu einer Ebene aufweisen, die in rechten Winkeln zu der Drehachse des Scheibenwerkzeugs ist.

7. Scheibenwerkzeug (1, 2, 3) nach einem der vorhergehenden Ansprüche, wobei eine Ebene (P), die in rechten Winkeln zu der Drehachse (Ar) ist, durch einen Übergangsabschnitt definiert ist, wo der radial äußere Abschnitt des Nabenabschnitts (10, 20, 30) auf den radial inneren Abschnitt des Bearbeitungsabschnitts (11, 21, 31) trifft, und wobei sich der Bearbeitungsabschnitt (10, 20, 30) zu 30-70% auf einer axialen Seite der Ebene (P) und zu 70-30% auf der anderen axialen Seite der Ebene (P) befindet.

8. Landwirtschaftliches Gerät zur Bodenbearbeitung, umfassend mehrere Scheibenwerkzeuge (1, 2, 3) nach einem der vorhergehenden Ansprüche.

9. Landwirtschaftliches Gerät nach Anspruch 8, wobei die Scheibenwerkzeuge (1, 2, 3) derart angeordnet sind, dass die Drehachse (Ar) einen Winkel von 70°-80° relativ zu einer Fahrtrichtung aufweist.

10. Landwirtschaftliches Gerät nach Anspruch 9, wobei die Drehachsen der Scheibenwerkzeuge (1, 2, 3) zueinander parallel, jedoch nicht koinzident sind.

11. Landwirtschaftliches Gerät nach einem der Ansprüche 8-10, wobei die Scheibenwerkzeuge (1, 2, 3) entlang einer ersten und zweiten Querreihe angeordnet sind, wobei die Scheibenwerkzeuge (1, 2, 3) auf jeder Reihe in dem im Wesentlichen gleichen Abstand voneinander und mit parallelen Drehachsen angeordnet sind und wobei die Scheibenwerkzeuge (1, 2, 3) auf einer der Reihen seitlich um einen Abstand von 80-120% des gegenseitigen Abstands relativ zu den Scheibenwerkzeugen (1, 2, 3) auf einer zweiten der Reihen versetzt sind.

12. Landwirtschaftliches Gerät nach Anspruch 11, wobei der gegenseitige Abstand 80-120% der axialen Erstreckung eines der Scheibenwerkzeuge (1, 2, 3), vorzugsweise 90-110% oder 95-105% beträgt.

13. Landwirtschaftliches Gerät nach Anspruch 11 oder 12, wobei die Drehachsen der Scheibenwerkzeuge (1, 2, 3) der ersten Reihe zu den Drehachsen der Scheibenwerkzeuge (1, 2, 3) der zweiten Reihe nicht parallel sind.

14. Verwendung des landwirtschaftlichen Geräts nach einem der Ansprüche 8-13 zum Aufbrechen von Feldresten, wobei die Scheibenwerkzeuge (1, 2, 3) eine durchschnittliche Arbeitstiefe von weniger als 10 cm, vorzugsweise weniger als 5 cm vorsehen.

## Revendications

1. Outil à disque (1, 2, 3) pour le concassage de résidus de champ, comprenant :
une section de plate-forme centrale (10, 20, 30) qui est conçue pour monter le disque dans un porte-outil afin que le disque puisse tourner autour d'un axe de rotation (Ar),
une section de culture (11, 21, 31) qui se situe radialement à l'extérieur et rejoint la section de plate-forme (10, 20, 30), et
une pluralité d'arêtes de coupe substantiellement droites (E1, E2) qui se situent à la périphérie de l'outil à disque,
la section de culture (11) comportant une pluralité d'ondulations (111, 112 ; 211, 212 ; 311, 312) qui, avec une extension axiale décroissante vers l'intérieur, vont des arêtes de coupe (E1, E2) à la section de plate-forme (10, 20, 30),
l'arête de coupe (E1, E2) étant conçue que pour 90 à 98 % d'une piste formée par l'arête de coupe consiste en sections de piste droites,
les arêtes de coupe (E1, E2), vues le long de la périphérie, ayant des angles alternant à raison de la même amplitude de +/-5° par rapport à la section de plate-forme,
les arêtes de coupe (E1, E2) décrivant un angle de 35° à 55° par rapport à un plan qui est à angle droit avec l'axe de rotation de l'outil à disque,
les arêtes de coupe (E1, E2) étant biseautées, de sorte que chaque arrête de coupe a une épaisseur de matériau qui diminue vers l'extérieur de l'arête, et
les ondulations (111, 112 ; 211, 212 ; 311, 312) ayant, à la périphérie de l'outil à disque, une extension axiale de 8 à 18 cm, de préférence 8 à 15 cm ou 9 à 12 cm.

2. Outil à disque (1, 2, 3) selon la revendication 1, dans lequel, vues dans un sens circonférentiel à la périphérie de l'outil à disque, les arêtes de coupe adjacentes (E1, E2) décrivent l'une par rapport à l'autre un angle de 75° à 115°, de préférence 85° à 115°, 95° à 105° ou 100° à 105°.

3. Outil à disque (2, 3) selon la revendication 1 ou 2, comprenant en outre un retrait (213, 214, 313) qui s'étend radialement vers l'intérieur depuis la périphérie et qui se situe à une intersection imaginaire entre deux arêtes de coupe (E1, E2).

4. Outil à disque (2, 3) selon la revendication 3, dans lequel le retrait (213, 214, 313) s'étend radialement vers l'intérieur sur une distance correspondant à 10 à 60 % d'un rayon du disque.

5. Outil à disque (2, 3) selon la revendication 3 ou 4, dans lequel le retrait (213, 214, 313) s'étend en correspondant avec un angle central de 1° à 25°, de préférence 2° à 15° ou 2° à 10°.

6. Outil à disque (1, 2, 3) selon l'une quelconque des revendications précédentes, dans lequel les arêtes de coupe (E1, E2) décrivent un angle pouvant atteindre 35° à 50° par rapport à un plan qui est à angle droit avec l'axe de rotation de l'outil à disque, de préférence 35° à 45°.

7. Outil à disque (1, 2, 3) selon l'une quelconque des revendications précédentes, dans lequel un plan (P) qui est à angle droit avec l'axe de rotation (Ar) est défini par une section de transition où la section radialement extérieure de la section de plate-forme (10, 20, 30) rencontre la section radialement intérieure de la section de culture (11, 21, 31), et la section de culture (10, 20, 30) se situe pour 30 à 70 % sur une face axiale dudit plan (P) et 70 à 30 % sur l'autre face axiale dudit plan (P).

8. Outil agricole pour la culture du sol, comprenant une pluralité d'outils à disque (1, 2, 3) selon l'une quelconque des revendications précédentes.

9. Outil agricole selon la revendication 8, dans lequel les outils à disque (1, 2, 3) sont disposés de manière à ce que l'axe de rotation (Ar) décrive un angle de 70 à 80° par rapport à un sens de déplacement.

10. Outil agricole selon la revendication 9, dans lequel les axes de rotation des outils à disque (1, 2, 3) sont mutuellement parallèles mais non coïncidents.

11. Outil agricole selon l'une quelconque des revendications 8 à 10, dans lequel les outils à disque (1, 2, 3) sont disposés suivant des première et seconde rangées transversales, les outils à disque (1, 2, 3) de chaque rangée étant disposés substantiellement à la même distance les uns des autres et avec des axes de rotation parallèles, et les outils à disque (1, 2, 3) d'une des rangées étant décalés latéralement d'une distance représentant 80 à 120 % de ladite distance mutuelle par rapport aux outils à disque (1, 2, 3) d'une seconde des rangées.

12. Outil agricole selon la revendication 11, dans lequel ladite distance mutuelle représente 80 à 120 % de l'extension axiale d'un des outils à disque (1, 2, 3), de préférence 90 à 110 % ou 95 à 105 %.

13. Outil agricole selon la revendication 11 ou 12, dans lequel les axes de rotation des outils à disque (1, 2, 3) de la première rangée ne sont pas parallèles aux axes de rotation des outils à disque (1, 2, 3) de la seconde rangée.

14. Utilisation de l'outil agricole selon l'une quelconque des revendications 8 à 13 pour le concassage de résidus de champ, les outils à disque (1, 2, 3) assurant une profondeur de travail moyenne de moins de 10 cm, de préférence moins de 5 cm.
